# EUROPÄISCHE PATENTSCHRIFT

(11) **EP 2 268 650 B1**
(45) Veröffentlichungstag und Bekanntmachung des Hinweises auf die Patenterteilung: **07.11.2012**
(21) Anmeldenummer: 09734308.1
(22) Anmeldetag: 24.04.2009
(51) Int. Cl.: C08G 18/76, C09J 175/04, C07F 7/18, C08G 18/10

(54) **HÄRTBARE ZUSAMMENSETZUNGEN ENTHALTEND SILYLIERTE POLYURETHANE**
CURABLE COMPOSITIONS CONTAINING SILYLATED POLYURETHANES
COMPOSITIONS DURCISSABLES CONTENANT DES POLYURÉTHANNES SILYLÉS

(30) Priorität: 25.04.2008 DE 102008020979
(43) Veröffentlichungstag der Anmeldung: 05.01.2011
(73) Patentinhaber: Henkel AG & Co. KGaA, 40589 Düsseldorf (DE)
(72) Erfinder: BOUDET, Helene, 40227 Düsseldorf (DE); BOLTE, Andreas, 40627 Düsseldorf (DE); BACHON, Thomas, 40597 Düsseldorf (DE); ZANDER, Lars, 41569 Rommerskirchen (DE); KUNZE, Christiane, 51061 Köln (DE); KLEIN, Johann, 40593 Düsseldorf (DE); DITGES, Nicole, 42653 Solingen (DE)
(86) Internationale Anmeldenummer: PCT/EP2009/054941
(87) Internationale Veröffentlichungsnummer: WO 2009/130298

(56) Entgegenhaltungen:
- WO-A1-96/38453
- WO-A1-98/18844

## Beschreibung

Die vorliegende Erfindung betrifft silanvernetzende, härtbare Zusammensetzungen auf der Basis von Umsetzungsprodukten aus isocyanatfunktionellen Prepolymeren und hydroxyfunktionellen Silanverbindungen und deren Herstellung und Verwendung in Kleb- und Dichtstoffen und Beschichtungsmitteln.

Polymersysteme, die über reaktive Alkoxysilylgruppen verfügen, sind bekannt. In Gegenwart von Luftfeuchtigkeit sind diese alkoxysilanterminierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder hochvernetzte Systeme (Duroplaste).

Die Polymere weisen in der Regel ein organisches Grundgerüst auf, das an den Enden Alkoxysilylgruppen trägt. Bei dem organischen Grundgerüst kann es sich beispielsweise um Polyurethane, Polyester, Polyether etc. handeln.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Dimethylpolysiloxanen sind in letzter Zeit auch verstärkt die so genannten modifizierten Silan-Kleb- und Dichtstoffe eingesetzt worden. Bei der letztgenannten Gruppe ist der Hauptbestandteil des Polymerrückgrades ein Polyether und die reaktiven und vernetzungsfähigen Endgruppen sind Alkoxysilylgruppen. Gegenüber den Polyurethan-Kleb- und Dichtstoffen weisen die modifizierten Silan-Kleb- und Dichtstoffe den Vorteil der Freiheit von Isocyanatgruppen, insbesondere von monomeren Diisocyanaten auf, weiterhin zeichnen sie sich durch ein breites Haftspektrum auf einer Vielzahl von Substraten ohne Oberflächenvorbehandlung durch Primer aus.

US 4,222,925 A und US 3,979,344 A beschreiben bereits bei Raumtemperatur härtbare siloxanterminierte organische Dichtstoffzusammensetzungen auf der Basis von Umsetzungsprodukten von Isocyanat-terminierten Polyurethan-Prepolymeren mit 3-Aminopropyltrimethoxysilan beziehungsweise 2-Aminoethyl-, 3-Aminopropylmethoxysilan zu isocyanatfreien siloxanterminierten Prepolymeren. Kleb- und Dichtstoffe auf der Basis dieser Prepolymeren weisen jedoch unbefriedigende mechanische Eigenschaften, insbesondere in Bezug auf ihre Dehnung und Reißfestigkeit auf.

Für die Herstellung von silanterminierten Prepolymeren auf der Basis von Polyethern sind die nachfolgend aufgeführten Verfahren bereits beschrieben worden:
- Copolymerisation von ungesättigten Monomeren mit solchen die Alkoxysilylgruppen aufweisen, wie z.B. Vinyltrimethoxysilan.
- Aufpfropfung von ungesättigten Monomeren wie Vinyltrimethoxysilan auf Thermoplaste wie Polyethylen.
- Hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluss von beispielsweise Übergangsmetallverbindungen der 8. Gruppe zu silanterminierten Polyethern umgesetzt werden.
- In einem anderen Verfahren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.
- Eine weitere Möglichkeit sieht die Umsetzung von hydroxyfunktionellen Polyethern mit isocyanatofunktionellen Silanen wie z.B. 3-lsocyanatopropyltrimethoxysilan vor.

Diese Herstellverfahren und die Verwendung der oben genannten silanterminierten Prepolymeren in Kleb-/Dichtstoffanwendungen sind beispielsweise in den folgenden Patentschriften genannt: US-A-3971751, EP-A-70475, DE-A-19849817, US-A-6124387, US-A-5990257, US-A-4960844, US-A-3979344, US-A-3632557, DE-A-4029504, EP-A-601021 oder EP-A-370464.

EP-A-0931800 beschreibt die Herstellung von silylierten Polyurethanen durch Umsetzung einer Polyolkomponente mit einer endständigen Ungesättigtheit von weniger als 0,02 meq/g mit einem Diisocyanat zu einem Hydroxyl-terminierten Prepolymer, das anschließend mit einem Isocyanatosilan der Formel OCN-R-Si-(X)ₘ(-OR¹)₃₋ₘ wobei m 0,1 oder 2 ist und jeder R¹-Rest eine Alkylgruppe mit 1 bis 4 C-Atomen und R eine difunktionelle organische Gruppe ist. Gemäß der Lehre dieser Schrift weisen derartige silylierte Polyurethane eine überlegene Kombination aus mechanischen Eigenschaften auf, die in vernünftigen Zeiträumen zu einem wenig klebrigen Dichtstoff aushärten, ohne eine übermäßige Viskosität aufzuweisen.

WO-A-2003 066701 offenbart Alkoxysilan- und OH-Endgruppen aufweisende Polyurethanprepolymere auf Basis von hochmolekularen Polyurethanprepolymeren mit erniedrigter Funktionalität zur Verwendung als Bindemittel für niedermodulige Dichtstoffe und Klebstoffe. Dazu soll zunächst ein Polyurethanprepolymer aus einer Diisocyanatkomponente mit einem NCO-Gehalt von 20 bis 60% mit einer Polyolkomponente, umfassend ein Polyoxyalkylendiol mit einem Molekulargewicht zwischen 3000 und 20000 als Hauptkomponente, umgesetzt werden, wobei die Umsetzung bei einem Umsatz von 50 bis 90% der OH-Gruppen gestoppt werden soll. Dieses Reaktionsprodukt soll anschließend mit einer Alkoxysilan- und Aminogruppen aufweisenden Verbindung weiter umgesetzt werden. Durch diese Maßnahmen sollen Prepolymere mit verhältnismäßig geringer mittlerer Molekülmasse und niedriger Viskosität erhalten werden, die die Erreichung eines hohen Eigenschaftsniveaus gewährleisten sollen.

WO-A-96/38453 beschreibt feuchtigkeitshärtende Alkoxysilan-funktionelle Polyurethane hergestellt aus einem hydroxyfunktionellen Alkoxysilan, insbesondere einem Hydroxyalkylencarbamoylalkylen-alkoxysilan, und einem isocyanatfunktionellen Polyurethanprepolymer. Gemäß der Lehre dieser Schrift können die Alkoxysilan-funktionellen Polyurethane zur Anwendung in feuchtigkeitshärtenden Klebstoffen, Dichtstoffen und ähnlichen Zubereitungen verwendet werden.

In ähnlicher Weise offenbart US-A-5866651 feuchtigkeitshärtende Dichtstoffzusammensetzungen auf Basis von Polyetherurethanen hergestellt aus Hydroxyalkylencarbamoylalkylenalkoxysilanen. Gemäß der Lehre dieser Schrift sollen die Polyethersegmente mehr als 15 mol% und weniger als 40 mol% Ethylenoxideinheiten aufweisen, wobei die Polyethersegmente ein zahlenmittleres Molekulargewicht zwischen 2000 und 8000 haben sollen, wobei die Ethylenoxideinheiten vorzugsweise an den Enden der Propylenoxideinheiten angeordnet sind.

Aus WO-A-2005 042605 sind feuchtigkeitshärtende Alkoxysilan-funktionelle Polyetherurethan-Zusammensetzungen bekannt, die 20 bis 90 Gew.% eines Polyetherurethans A mit zwei oder mehr reaktiven Silangruppen und 10 bis 80 Gew.% eines Polyetherurethans B mit einer reaktiven Silangruppe enthalten. Das Polyetherurethan A soll dabei Polyethersegmente mit einem zahlenmittleren Molekulargewicht (Mₙ) von mindestens 3000 und einer Ungesättigtheit von weniger als 0,04 meq/g aufweisen, und die reaktiven Silangruppen sollen durch Reaktion einer isocyanatreaktiven Gruppe mit einer Verbindung der Formel OCN-Y-Si-(X)₃ eingefügt werden. Das Polyetherurethan B soll ein oder mehrere Polyethersegmente mit einem zahlenmittleren Molekulargewicht (Mₙ) von 1000 bis 15000 aufweisen und die reaktiven Silangruppen sollen durch Reaktion einer Isocyanatgruppe mit einer Verbindung der Formel HN(R₁)-Y-Si-(X)₃ eingefügt werden. R₁ ist dabei eine Alkyl-, Cycloalkyl- oder aromatische Gruppe mit 1 bis 12 C-Atomen, X eine Alkoxygruppe und Y ein lineares Radikal mit 2 bis 4 C-Atomen oder ein verzweigtes Radikal mit 5 bis 6 C-Atomen.

Zur Reduzierung der Funktionalität und damit der Vernetzungsdichte von feuchtigkeitshärtenden alkoxysilanterminierten Polyurethanen schlägt WO-A-92/05212 die Mitverwendung von monofunktionellen Isocyanaten im Gemisch mit Diisocyanaten bei der Synthese vor. Monoisocyanate haben bekanntlich einen sehr hohen Dampfdruck und sind wegen ihrer Toxizität in arbeitshygienischer Sicht bedenkliche Einsatzstoffe.

EP-A-1396513 beschreibt eine bei Raumtemperatur härtende Zusammensetzung, welche ein Polyoxyalkylenpolymer (A) mit einem Molekulargewicht von 8000 bis 50000 (berechnet aus der Hydroxylzahl) enthält, das hydrolysierbare Siliziumgruppen der Formel -SiXₐR¹₃₋ₐ aufweist. Darin ist X eine Hydroxylgruppe oder eine hydrolysierbare Gruppe, a ist 1, 2, oder 3 und R¹ ist eine C₁₋₂₀ substituierte oder unsubstituierte einwertige organische Gruppe. Die Zusammensetzung soll dabei sowohl Polyoxyalkylenpolymere (A) enthalten, bei denen a 1 oder 2 ist, als auch solche, bei denen a 3 ist. Wenn mehr als ein R¹ vorhanden ist, kann die Mehrzahl von R¹ gleich oder unterschiedlich sein, und wenn mehr als ein X vorhanden ist, kann die Mehrzahl von X gleich oder unterschiedlich sein. Die bei Raumtemperatur härtende Zusammensetzung soll als Dichtungsmasse, Imprägnierungsmittel, Klebstoff oder Beschichtungsmittel verwendbar sein.

Es besteht weiterhin das Bedürfnis nach isocyanatfreien Zusammensetzungen zur Herstellung von 1 K- oder 2K- Kleb- und Dichtstoffen, die eine akzeptable Härtungszeit und nach Aushärtung eine besonders gute Elastizität und Dehnbarkeit aufweisen. Ferner besteht der Wunsch nach einer effizienten Syntheseroute und nach Zusammensetzungen, die keine Restklebrigkeit aufweisen.

Aufgabe der vorliegenden Erfindung ist es daher, isocyanatfreie vernetzbare Zusammensetzungen bereitzustellen, die eine hohe Elastizität und eine gute Festigkeit bei sehr niedrigem E-Modul aufweisen. Ferner ist eine anwenderfreundliche Härtungszeit erwünscht.

Die erfindungsgemäße Lösung der Aufgabe ist den Patentansprüchen zu entnehmen.

Sie besteht im Wesentlichen in der Bereitstellung eines Verfahrens zur Herstellung eines silylierten Polyurethans, umfassend das
Umsetzen
(i) mindestens einer Polyolverbindung mit einem Molekulargewicht von 4 000-20 000 Dalton mit
(ii) einem Diisocyanat bei einem stöchiometrischen Überschuss der Diisocyanatverbindung gegenüber der Polyolverbindung oder den Polyolverbindungen bzw. gegenüber den OH-Gruppen der Polyolverbindung oder der Polyolverbindungen, wodurch ein Polyurethan-Prepolymer gebildet wird, das Isocyanat-terminiert ist; und die nachfolgende Umsetzung des Polyurethan-Prepolymers mit einem oder mehreren OH-terminierten Silanen der Formel (1): 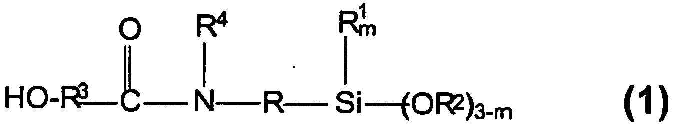 zu einem Polyurethan mit überwiegend endständigen Alkoxysilylgruppen
wobei die Polyolmischung zusätzlich mindestens eine gegenüber Isocyanaten monofunktionelle Verbindung ausgewählt aus Monoalkoholen, Monomercaptanen, Monoaminen oder deren Mischungen enthält und der Anteil der monofunktionellen Verbindung 1 bis 40 Mol% der Mischung aus Polyol und der monofunktionellen Verbindung beträgt.

In der Formel (1) ist m = 0, 1 oder 2, R¹ ein Alkylrest mit 1 bis 4 Kohlenstoffatomen, R² ein Alkylrest mit 1 bis 4 Kohlenstoffatomen, R³ ist ein divalenter organischer Rest mit 1 bis 12, bevorzugt bis 10 Atomen ausgewählt aus C, N, S und / oder O in der Kette, R⁴ ist ein Wasserstoffatom oder ein Alkylrest mit 1 bis 10 Kohlenstoffatomen und R ist eine difunktionelle organische Gruppe, vorzugsweise eine lineare oder verzweigte Alkylengruppe mit 1 bis 6 C-Atomen.

In bevorzugten Ausführungsformen hat R³ die folgenden Strukturelemente (2): 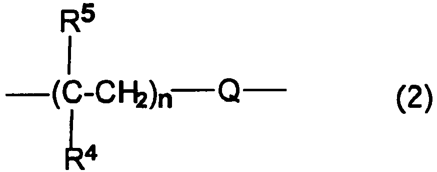 wobei n eine ganze Zahl zwischen 1 und 6 ist,
Q ist N, O, S, eine kovalente Bindung oder NR⁴ und
R⁴ und R⁵ können unabhängig voneinander ein Wasserstoffatom oder ein Alkylrest mit 1 bis 10 Kohlenstoffatomen sein.

Die Erfindung betrifft auch ein Polyurethan mit Alkoxysilan-Endgruppen, das hergestellt wird durch Umsetzen mindestens einer Polyolverbindung mit einem Molekulargewicht von 4000 bis 20000 Dalton mit einem Diisocyanat bei einem stöchiometrischen Überschuss des Diisocyanates gegenüber den OH-Gruppen des Polyols zu einem Isocyanat-terminierten Polyurethanprepolymer, dass in einer Folgereaktion mit einem oder mehreren OH-terminierten Silanen der Formel (1) umgesetzt wird, wodurch ein silyliertes Polyurethan gebildet wird, das Alkoxysilylgruppen als reaktive Endgruppen aufweist, wobei die Polyolmischung zusätzlich mindestens eine gegenüber Isocyanaten monofunktionelle Verbindung ausgewählt aus Monoalkoholen, Monomercaptanen, Monoaminen oder deren Mischungen enthält und der Anteil der monofunktionellen Verbindung 1 bis 40 Mol% der Mischung aus Polyol und der monofunktionellen Verbindung beträgt.

Ein weiterer Gegenstand der vorliegenden Erfindung ist eine feuchtigkeitshärtende Klebstoff-, Dichtstoff- oder Beschichtungsstoff- Zubereitung und deren Verwendung, die ein oder mehrere silylierte Polyurethan(e) der vorgenannten Art enthält. Zusätzlich zu den erfindungsgemäßen silylierten Polyurethanen kann diese Zubereitung noch Weichmacher, Füllstoffe, Katalysatoren und weitere Hilfs- und Zusatzstoffe enthalten.

In einer weiteren bevorzugten Ausführungsform der vorliegenden Erfindung ist R in Formel (1) ein difunktioneller gerader oder verzweigter Alkylenrest mit 2 bis 6 Kohlenstoffatomen.

In einer weiteren bevorzugten Ausführungsform der vorliegenden Erfindung ist m in Formel (1) null oder eins, d. h. das silylierte Polyurethan enthält Tri- bzw. Dialkoxysilylgruppen. Der besondere Vorteil von Dialkoxysilylgruppen liegt darin, dass die entsprechenden Zusammensetzungen nach der Aushärtung elastischer, weicher sind als Trialkoxysilylgruppen enthaltende Systeme. Sie sind deshalb insbesondere für eine Anwendung als Dichtstoffe geeignet. Darüber hinaus spalten sie bei der Aushärtung weniger Alkohol ab und bieten deshalb auch unter physiologischen Gesichtspunkten einen Anwendungsvortell. Mit Trialkoxysilylgruppen hingegen lässt sich ein höherer Vernetzungsgrad erreichen, was besonders vorteilhaft ist, wenn nach der Aushärtung eine harte, feste Masse gewünscht wird. Darüber hinaus sind Trialkoxysilylgruppen reaktiver, vernetzen also schneller und senken somit die benötigte Menge an Katalysator, und sie weisen Vorteile beim "kalten Fluss" auf.

Als Polyolverbindungen und damit als Hauptbestandteil des Polymergerüstes der erfindungsgemäßen silylierten Polyurethane können zwar prinzipiell eine Vielzahl von mindestens zwei Hydroxylgruppen-tragenden Polymeren eingesetzt werden - beispielhaft genannt seien Polyesterpolyole, Hydroxylgruppen-haltige Polycaprolactone, Hydroxylgruppen-haltige Polybutadiene oder Polyisoprene sowie deren Hydrierungsprodukte oder auch Hydroxylgruppen-haltige Polyacrylate oder Polymethacrylate.

Ganz besonders bevorzugt werden jedoch als Polyole Polyalkylenglycole, insbesondere Polyethylenoxide und/oder Polypropylenoxide.

Polyole, die Polyether als Polymergerüst enthalten, besitzen nicht nur an den Endgruppen, sondern auch im Polymerrückgrat eine flexible und elastische Struktur. Damit kann man Zusammensetzungen herstellen, die nochmals verbesserte elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Nach einer weiteren bevorzugten Ausführungsform der erfindungsgemäßen Zusammensetzung beträgt das Molekulargewicht Mₙ des Polymergerüsts der Polyolverbindungen zwischen 4000 und 20000 g/mol (Dalton), besonders bevorzugt zwischen 8000 und 19000 Dalton und insbesondere zwischen 12000 und 18000 Dalton, wobei die terminale Ungesättigtheit kleiner als 0,05 meq/g, bevorzugt kleiner als 0,04 meq/g and ganz besonders bevorzugt kleiner als 0,02 meq/g ist.

Diese Molekulargewichte sind besonders vorteilhaft, da diese Polyole kommerziell leicht verfügbar sind.

Ganz besonders bevorzugt werden Polyoxyalkylene, insbesondere Polyethylenoxide oder Polypropylenoxide, eingesetzt, die eine Polydispersität PD von weniger als 2, bevorzugt weniger als 1,5 aufweisen.

Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermeationschromatographie (GPC, auch: SEC) bestimmt werden. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Besonders vorteilhafte viskoelastische Eigenschaften lassen sich erreichen, wenn man als polymere Grundgerüste Polyoxyalkylenpolymere, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Diese Polyoxyalkylenpolymere zeichnen sich durch eine besonders enge Molmassenverteilung, durch eine hohe mittlere Molmasse und durch eine sehr niedrige Zahl an Doppelbindungen an den Enden der Polymerketten aus. Silylierte Polyurethane, die ein derartiges Grundgerüst aufweisen, bzw. darauf beruhende Zubereitungen weisen neben einer anwenderfreundlichen Viskosität insbesondere hervorragende Zugscherfestigkeiten auf.

Solche Polyoxyalkylenpolymere haben eine Polydispersität PD (M_{w}/Mₙ) von höchstens 1,7. Besonders bevorzugte organische Grundgerüste sind beispielsweise Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14; ihre terminale Ungesättigtheit ist kleiner als 0,05 meq/g, bevorzugt kleiner als 0,04 meq/g and ganz besonders bevorzugt kleiner als 0,02 meq/g.

Besonders bevorzugt werden Polyethylenoxide und/oder Polypropylenoxide eingesetzt, wobei die Polyetherpolymere an den Enden vorzugsweise Propylenoxideinheiten aufweisen und difunktionell sind. In einer ganz besonders bevorzugten Ausführungsform der vorliegenden Erfindung wird als Polyolverbindung Polypropylenoxid eingesetzt. Propylenoxid ist der DMC-Katalyse besonders gut zugänglich, so dass auf diesem Weg Polyole mit relativ hohen Molekulargewichten bei einem gleichzeitig hohen Grad an OH-Funktionalisierung, wobei Bifunktionalität bevorzugt ist, und geringer Polydispersität erhalten werden. Diese Parameter begünstigen - wie vorstehend bereits dargelegt wurde - die viskoelastischen Eigenschaften der erfindungsgemäßen silylierten Polyurethane.

Für die Umwandlung der Polyolverbindung in ein Isocyanatterminiertes Polyurethan-Prepolymer können die folgenden Diisocyanate verwendet werden:
Ethylendiisocyanat, 1,4-Tetramethylendüsocyanat, 1,4-Tetramethoxybutandüsocyanat, 1,6-Hexamethylendiisocyanat (HDI), Cyclobutan-1,3-diisocyanat, Cyclohexan-1,3- und -1,4-düsocyanat, Bis(2-isocyanato-ethyl)fumarat, 1-Isocyanato-3,3,5-trimethyl-5-isocyanatomethylcyclohexan (Isophorondüsocyanat, IPDI), 2,4- und 2,6-Hexahydrotoluylendiisocyanat, Hexahydro-1,3-oder-1,4-phenylendüsocyanat, Benzidindiisocyanat, Naphthalin-1,5-düsocyanat, 1,6-Diisocyanato-2,2,4-trimethylhexan, 1,6-Diisocyan ato-2,4 ,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandüsocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Diisocyanate der Dimerfettsäuren, oder Gemische aus zwei oder mehr der genannten Diisocyanate, in Frage.

Bei der Herstellung des Isocyanat -terminierten Polyurethan-Prepolymers werden noch monofunktionelle Verbindungen mitverwendet.
Erfindungsgemäß sind als monofunktionelle Verbindungen solche Verbindungen geeignet, die gegenüber Isocyanaten reaktive Gruppen mit einer Funktionalität von 1 haben. Grundsätzlich sind hierfür alle monofunktionellen Alkohole, Amine oder Mercaptane verwendbar, dies sind insbesondere monofunktionelle Alkohole mit bis zu 36 Kohlenstoffatomen, monofunktionelle primäre und/oder sekundäre Amine mit bis zu 36 Kohlenstoffatomen oder monofunktionelle Mercaptane mit bis zu 36 Kohlenstoffatomen. Es können aber auch Mischungen von Polyalkoholen, Polyaminen und/oder Polymercaptanen als monofunktionelle Verbindungen verwendet werden, solange deren durchschnittliche Funktionalität deutlich unter 2 liegt.

Besonders bevorzugt sind zum Beispiel Monoalkohole wie Benzylalkohol, Methanol, Ethanol, die Isomeren des Propanols, Butanols und Hexanols, Monoether von Ethylenglykol und/oder Diethylenglykol, sowie die durch Reduktion von Fettsäuren erhältlichen primären Alkohole mit 8 bis 18 C-Atomen wie Octanol, Decanol, Dodecanol, Tetradecanol, Hexadecanol und Octadecanol, insbesondere in Form technischer Gemische derselben. Monoalkohole mit 4 bis 18 C-Atomen sind bevorzugt, da sich die niedrigen Alkohole nur schwer wasserfrei herstellen lassen.

Weiterhin einsetzbar sind Monoalkylpolyetheralkohole unterschiedlichen Molekulargewichts, wobei ein Zahlenmittel des Molekulargewichts zwischen 1000 und 2000 bevorzugt ist. Ein bevorzugter Vertreter ist z. B. Monobutylpropylenglykol.

Es können auch gesättigte Fettalkohole mit bis zu 26 Kohlenstoffatomen eingesetzt werden, vorzugsweise solche mit bis zu 22 Kohlenstoffatomen, die großtechnisch durch Reduktion (Hydrierung) von Fettsäuremethylestem synthetisiert werden. Beispielhaft genannt seien: Capronalkohol, Caprylalkohol, Pelargonalkohol, Caprinalkohol, Laurinalkohol, Myristinalkohol, Cetylalkohol, Stearylalkohol, Gadoleylalkohol und Behenylalkohol oder die Guerbetalkohole 2-Hexyldecanol, 2-Octyldodecanol, 2-Decyltetradecanol, 2-Dodecylhexadecanol, 2-Tetradecyloctadecanol, 2-Hexadecyleicosanol, Guerbetalkohol aus Erucylalkohol, Behenylalkohol und Ocenolen.

Gegebenfalls können Gemische, resultierend aus der Guerbetisierung technischer Fettalkohole, zusammen mit den anderen vorgenannten Alkoholen, verwendet werden.

Der Anteil der monofunktionellen Verbindung(en) beträgt 1 bis 40 Molprozent, bezogen auf die Polyolmischung, besonders bevorzugt ist ein Anteil an monofunktioneller Verbindung(en) von 15 bis 30 Molprozent.

Der stöchiometrische Überschuss der Diisocyanatverbindung oder Mischung aus Diisocyanaten gegenüber der eingesetzten Summe aus Polyolverbindungen und monofunktioneller Verbindung bzw. gegenüber den OH-Gruppen der eingesetzten Summe aus Polyolverbindungen und monofunktioneller Verbindung beträgt 1,1 bis 2,0, vorzugsweise liegt er zwischen 1,2 und 1,5. Hierdurch ist sichergestellt, dass als Umsetzungsprodukt ein Polyurethan-Prepolymer mit endständigen Isocyanatgruppen gebildet wird.

Das so gebildete Polyurethan-Prepolymer mit endständigen Isocyanatgruppen wird anschließend mit einem Silan der Formel (1) zu dem erfindungsgemäßen silylierten Polyurethan umgesetzt, das Alkoxysilylgruppen als reaktive Endgruppen aufweist. Dazu ist es notwendig, dass pro Isocyanatgruppe des Polyurethan-Prepolymers mit endständigen Isocyanatgruppen mindestens ein Molekül des Silans der Formel (1) verwendet wird, vorzugsweise wird das Silan der Formel (1) im geringen stöchiometrischen Überschuß eingesetzt.

Das Silan der Formel (1) wird vorzugsweise durch Umsetzung eines Aminosilans mit primären oder sekundären Aminogruppen mit einem Carbonat, ausgewählt aus Ethylencarbonat, Propylencarbonat, Butylencarbonat oder einem Lacton, ausgewählt aus Propiolacton, Butyrolacton oder Caprolacton hergestellt.

Das Aminosilan kann ausgewählt werden aus 3-Aminopropyl-trimethoxysilan, 3-Aminopropyl-triethoxysilan, N-(n-butyl)-3-Aminopropyltrimethoxysilan, 3-aminopropylmethyldimethoxysilan, 3-Aminopropylmethyldiethoxysilan, N-Cyclohexylaminomethylmethyldiethoxysilan, N-Cyclohexylaminomethyltriethoxysilan, N-Phenylaminomethyltrimethoxysilan, N-Cyclohexyl-3-aminopropyltrimethoxysilan, oder Bis(3-triethoxysilylpropyl)amin.

Die erfindungsgemäßen Kleb- und Dichtstoff-Zubereitungen können neben den vorgenannten silylierten Polyurethanverbindungen noch weitere Hilfs- und Zusatzstoffe enthalten, die diesen Zubereitungen verbesserte elastische Eigenschaften, verbesserte Rückstellfähigkeit, ausreichend lange Verarbeitungszeit, schnelle Durchhärtungsgeschwindigkeit und geringe Restklebrigkeit verleihen. Zu diesen Hilfs- und Zusatzstoffen gehören beispielsweise Weichmacher, Stabilisatoren, Antioxidantien, Füllstoffe, Reaktivverdünner, Trockenmittel, Haftvermittler und UV-Stabilisatoren, rheologische Hilfsmittel, Farbpigmente oder Farbpasten und/oder gegebenenfalls auch im geringen Umfang Lösungsmittel.

Als Weichmacher geeignet sind beispielsweise Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf) oder auch Ester der Abietinsäure.

Beispielsweise eignen sich von den Phthalsäureestern Dioctylphthalat (DOP), Dibutylphthalat, Diisoundecylphthalat (DIUP) oder Butylbenzylphthalat (BBP), von den Adipaten Dioctyladipat (DOA), Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Besonders bevorzugt sind jedoch endgruppenverschlossene Polyethylenglykole, wie Polyethylen- oder Polypropylenglykoldialkylether, wobei der Alkylrest ein bis vier C-Atome beträgt, insbesondere die Dimethyl- und Diethylether von Diethylenglykol und Dipropylenglykol, sowie Gemische aus zwei oder mehr davon. Insbesondere mit Dimethyldiethylenglykol wird auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.
Weichmacher können in den Zubereitungen zwischen 0 und 40, vorzugsweise zwischen 0 und 20 Gew.% (bezogen auf die Gesamtzusammensetzung) in der Zubereitung mit verwendet werden.

Unter "Stabilisatoren" im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und /oder Schwefel zugegeben werden. Die erfindungsgemäße Zubereitung kann bis zu etwa 2 Gew.-%, vorzugsweise etwa 1 Gew.-% an Stabilisatoren enthalten. Ferner kann die erfindungsgemäße Zubereitung weiterhin bis zu etwa 7 Gew.-%, insbesondere bis zu etwa 5 Gew.-% Antioxidantien enthalten.

Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppen zu Siloxangruppierungen (Vernetzungsreaktion bzw. Haftvermittlungsfunktion) katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Dibutylzinndiethylhexanoat, Dibutylzinndioctoat, Dibutylzinndimethylmaleat, Dibutylzinndiethylmaleat, Dibutylzinndibutylmaleat, Dibutylzinndiiosooctylmaleat, Dibutylzinnditridecylmaleat, Dibutylzinndibenzylmaleat, Dibutylzinnmaleat, Dibutylzinndiacetat, Zinnoctaoat, Dioctylzinndistealeat, Dioctylzinndilaulat, Dioctylzinndiethylmaleat, Dioctylzinndiisooctylmaleat, Dioctylzinndiacetat, und Zinnnaphthenoat; Zinnalkoxide wie Dibutylzinndimethoxid, Dibutylzinndiphenoxid, und Dibutylzinndiisoproxid; Zinnoxide wie Dibutylzinnoxid, und Dioctylzinnoxid; Reaktionsprodukte zwischen Dibutylzinnoxiden und Phthalsäureestern, Dibutylzinnbisacetylacetonat; Organoaluminumverbindungen wie Aluminumtrisacetylacetonat, Aluminumtrisethylacetoacetat, und Diisopropoxyaluminum-ethylacetoacetat; Chelatverbindungen wie Zirconumtetraacetylacetonat, und Titantetraacetylacetonat; Bleioctanoat; Aminverbindungen oder ihre Salze mit Carbonsäuren, wie Butylamin, Octylamin, Laurylamin, Dibutylamine, Monoethanolamine, Diethanolamine, Triethanolamin, Diethylenetriamin, Triethylenetetramin, Oleylamine, Cyclohexylamin, Benzylamin, Diethylaminopropylamin, Xylylenediamin, Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), ein niedermolekulares Polyamid-Harz erhalten aus einem Überschuss eines Polyamins und einer polybasischen Säure, Addukte aus einem Polyamin im Überschuss mit einem Epoxid, Silanhaftvermittler mit Aminogruppen, wie 3-Aminopropyltrimethoxysilan, und N-(β-aminoethyl)aminopropylmethyldimethoxysilan. Der Katalysator, bevorzugt Mischungen mehrerer Katalysatoren, werden in einer Menge von 0,01 bis etwa 5 Gew.-%, bezogen auf das Gesamtgewicht der Zubereitung, eingesetzt.

Die erfindungsgemäße Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydriertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 150.000, vorzugsweise 40.000 bis 80.000 mPas oder auch 50.000 bis 60.000 mPas.

Die Füllstoffe werden vorzugsweise in einer Menge von 1 bis 80 Gew.-%, vorzugsweise von 5 bis 60 Gew.%, bezogen auf das Gesamtgewicht der Zubereitung eingesetzt.

Beispiele für geeignete Pigmente sind Titandioxid, Eisenoxide oder Ruß.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen. Es besteht gelegentlich auch Bedarf, die Viskosität des erfindungsgemäßen Kleb- oder Dichtstoffs für bestimmte Anwendungen durch Verwendung eines Reaktivverdünners zu erniedrigen. Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, wie Methyltrimethoxysilan, Methyltriethoxysilan sowie Vinyltrimethoxysilan (VTMO, Geniosil XL 10, Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-l-propyltriethoxysilan und Teilhydrolysate dieser Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silanmodifizierte Polyether verwenden, die sich z.B. aus der Umsetzung von Isocyanatosilan mit Synalox Typen ableiten.

In gleicher Weise können die erfindungsgemäßen Prepolymeren in Abmischung mit üblichen an sich bekannten Polymeren oder Prepolymeren, ggf. unter Mitverwendung der vorgenannten Reaktivverdünner, Füllstoffe und weiterer Hilfs- und Zusatzstoffe, eingesetzt werden. "Übliche Polymere oder Prepolymere", können dabei ausgewählt werden aus Polyestern, Polyoxyalkylenen, Polyacrylaten, Polymethacrylaten oder deren Mischungen, wobei diese frei von mit Siloxangruppen reaktiven Gruppen sein können, aber ggf. auch Alkoxysilylgruppen oder Hydroxylgruppen aufweisen können.

Eine Vielzahl der vorgenannten silanfunktionellen Reaktivverdünner haben gleichzeitig eine trocknende und / oder haftvermittelnde Wirkung in der Zubereitung. Diese Reaktivverdünner werden in Mengen zwischen 0,1 und 15 Gew.%, vorzugsweise zwischen 1 und 5 Gew.%, bezogen auf die Gesamtzusammensetzung der Zubereitung eingesetzt.

Als Haftvermittler eignen sich aber auch so genannte Klebrigmacher wie Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxidharzen in geringen Mengen kann bei manchen Substraten die Haftung verbessern. Hierfür werden dann vorzugsweise die festen Epoxidharze mit einem Molekulargewicht von über 700 in fein gemahlener Form eingesetzt. Falls Klebrigmacher als Haftvermittler eingesetzt werden, hängt deren Art und Menge von der Kleb- / Dichtstoffzusammensetzung ab sowie von dem Substrat, auf welches dieser appliziert wird. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.%, bezogen auf die Gesamtzusammensetzung der Zubereitung, verwendet.

Die Herstellung der erfindungsgemäßen Zubereitung erfolgt nach bekannten Verfahren durch inniges Vermischen der Bestandteile in geeigneten Dispergieraggregaten, z. B. Schnellmischer, Kneter, Planetenmischer, Planetendissolver, Innenmischer, so genannte "Banburymischer", Doppelschneckenextruder und ähnliche dem Fachmann bekannte Mischaggregate.

Eine bevorzugte Ausführungsform der erfindungsgemäßen Zubereitung kann enthalten:
- 5 bis 50 Gew.-%, bevorzugt 10 bis 40 Gew.-% einer oder mehrerer Verbindungen der erfindungsgemäßen silylierten Polyurethane,
- 0 bis 30 Gew.-%, bevorzugt weniger als 20 Gew.-%, besonders bevorzugt weniger als 10 Gew.-% Weichmacher,
- 0 bis 80 Gew.-%, bevorzugt 20 bis 60 Gew.-%, besonders bevorzugt 30 bis 55 Gew.-% Füllstoffe
Ferner kann die Ausführungsform weitere Hilfsstoffe enthalten.
Die Gesamtheit aller Bestandteile summiert sich zu 100 Gew.-%, wobei sich die Summe der oben aufgeführten Hauptbestandteile allein nicht zu 100 Gew.-% addieren muss.

Die erfindungsgemäßen silylierten Polyurethan-Prepolymere härten mit der umgebenden Luftfeuchtigkeit zu niedermoduligen Polymeren aus, so dass aus diesen Prepolymeren mit den vorgenannten Hilfs- und Zusatzstoffen niedermodulige, feuchtigkeitshärtende Kleb- und Dichtstoffzubereitungen herstellbar sind.

In den nachfolgenden Ausführungsbeispielen soll die Erfindung näher erläutert werden, wobei die Auswahl der Beispiele keine Beschränkung des Umfangs des Erfindungsgegenstandes darstellen soll.

### Beispiele

### Beispiel 1 (Vergleich)

282 g (15 mmol) Polypropylenglykol 18000 (OHZ=6,0) wurden in einem 500 ml Dreihalskolben bei 100°C im Vakuum getrocknet. Unter Stickstoffatmosphäre wurde bel 80°C 0,1 g DBTL hinzugegeben und anschließend mit 7,2 g (32 mmol) Isocyanatopropyltrimethoxysilan (%NCO=18,4) versetzt. Nach einstündigem Rühren bei 80°C wurde das entstandene Polymer abgekühlt und mit 6 g Vinyltrimethoxysilan versetzt.

### Beispiel 2 Herstellung eines hydroxyterminierten Silans

In einem Rührkolben wurden 138 g (11 mmol) Propylencarbonat und 220 g (10 mmol) 3-Aminopropyltrimethoxysilan (Dynasilan AMMO, Fa. Evonik) 12 Stunden bei Raumtemperatur gerührt. Eine im IR- Spektrometer untersuchte Probe zeigte die vollständige Umsetzung des Propylencarbonates und indizierte die Weiterverarbeitung.

### Beispiel 3 Herstellung eines silylierten Polyurethanprepolymers

322 g (10 mmol) Polypropylenglycol mit einem Molekulargewicht (Mₙ) von 8000 g/mol wurde mit 16,7 g (24 mmol) TMXDI als Diisocyanat vorgelegt und unter Zinn- / Bismuth Katalyse (Borchikat 22/24) zum NCO terminierten Prepolymer bei 80°C umgewandelt. Die Umwandlung erfolgte unter NCO Kontrolle und sobald der theoretische NCO Wert des Prepolymers erreicht wurde (titrimetrisch), wurden 27,8 g des in Beispiel 2 hergestellten OH-terminierten Silans hinzudosiert, 1 Stunde nachgerührt und mit UV Stabilisator sowie VTMO versetzt. Zur Überprüfung der Reaktion wurde der korrespondierende NCO Wert bestimmt, der am Ende Null war.

### Allgemeine Vorschrift zur Herstellung der härtbaren Kleb-/Dichtstoff-Zubereitungen:

25 Gewichtsteile der in den Beispielen 1 bzw. 3 hergestellten Polymermischung wurden in einem Rührkessel mit 20 Gewichtsteilen Diisoundecylphtalat (DIUP)mittels eines Speedmixers 30 s innig vermengt.
In die so erhaltene Mischung wurden nacheinander 45,05 Gewichtsteile Calciumcarbonat (Omya 302, "ultrafine ground calcium carbonate"), 3,35 Gewichtsteile stabilisiertes Titandioxid vom Rutiltyp (Kronos 2056), 1,5 Teile Vinyltrimethoxysilan ("VTMO", Wacker Geniosil XL10), 0,95 Gewichtsteile 3-Aminopropyltrimethoxisilan ("AMMO", Wacker Geniosil GF96) sowie 0,05 Gewichtsteile Dibutylzinndilaurat und insgesamt 0,6 Gewichtsteile einer Mischung von 2 Alterungsschutzmitteln eingebracht und das so entstandene Gemenge für 30 s in einem Speedmixer innig vermischt.

### Prüfbedingungen

Von diesen Mischungen wurden Hautbildungszeit (Skin over time / SOT) sowie die Geschwindigkeit der Durchhärtung (jeweils bei 23°C, 50% relative Luftfeuchtigkeit) ermittelt. Weiterhin wurden die oben genannten Mischungen mit einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Prüfkörper) ausgestanzt und die mechanischen Daten (E-Module bei 50, 100 und 200% Dehnung, Bruchdehnung, Zugfestigkeit und Rückstellvermögen) in Anlehnung an DIN EN 27389 und DIN EN 28339 bestimmt.

Die Ergebnisse der hergestellten härtbaren Kleb-/Dichtstoffzubereitung sind in der nachfolgenden Tabelle 1 denen einer härtbaren Kleb-/Dichtstoffzubereitung gemäß Stand der Technik gegenübergestellt.

**Tabelle 1**

| | Beispiel 4 (Vergleich) | Beispiel 5 | Beispiel 6 |
|---|---|---|---|
| Polymer aus Beispiel 1 | 25,00 | | 12,5 |
| Polymer aus Beispiel 3 | | 25,00 | 12,5 |
| DIUP | 20^{,}0₀ | 20,00 | 20 |
| Omya 302 (ultrafine ground calcium carbonate) | 45,05 | 45,05 | 45,05 |
| Kronos 2056 | 3,35 | 3,35 | 3,35 |
| Tinuvin 327 | 0,30 | 0,30 | 0,30 |
| Tinuvin 770 DF | 0, 30 | 0, 30 | 0,30 |
| Dynasylan VTMO / Geniosil XL10 | 1,50 | 1,50 | 1,50 |
| Dynasylan AMMO / Geniosil GF96 | 0,95 | 0,95 | 0,95 |
| DBTL (3 Tropfen) | 0,05 | 0,05 | 0, 05 |

| **Ergebnisse nach 7 Tagen** | | | |
|---|---|---|---|
| SOT in min (Klimaraum) | 25 | 100 | 35 |
| Bruch in N/mM² | 1,03 | 0,19 | 0,5 |
| Dehnung in % | 188% | 162% | 211% |
| E- 50 N/mm² | 0,50 | 0,08 | 0,29 |
| E-100N/mm² | 0,68 | 0,16 | 0,46 |
| E- 200 N/mm³ | 1,11 | - | 0,8 |
| Durchhärtunq in mm/24St. | 1,95 | 1,65 | 1,9 |
| Rückstellkraft in % | 90% | 90% | 90% |

Die Zubereitungen der Beispiele 5 und 6 zeigen ein ausgewogenes Verhältnis von Dehnfähigkeit (Bruchdehnung in %), sehr niedrigem E-Modul bei 50 bzw. 100 % Dehnung (E-100 bzw. E-50) und guter Rückstellkraft in %. Der niedrige Modul ist erwünscht, da dies die Flanke einer Dehnungsfuge bei thermisch oder mechanisch bedingten Bewegungen einer abgedichteten Fuge sehr wenig belasten würde.

## Patentansprüche

1. Verfahren zur Herstellung eines silylierten Polyurethans, umfassend:
(A) Umsetzen
(i) mindestens einer Polyolverbindung mit einem Molekulargewicht von 4 000-20 000 Dalton mit
(ii) einem Diisocyanat bei einem stöchiometrischen Überschuss der Düsocyanatverbindung gegenüber den OH-Gruppen der Polyolverbindung oder der Polyolverbindungen, wodurch ein Polyurethan-Prepolymer gebildet wird, das Isocyanat-terminiert ist; und
(B) Umsetzen des Polyurethan-Prepolymers mit einem oder mehreren OH-terminierten Silanen der Formel (1): 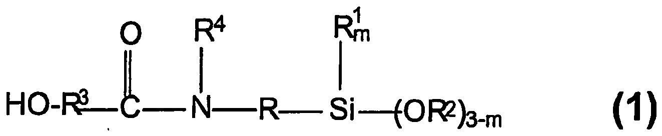 worin m 0, 1 oder 2 ist, R¹ ein Alkylrest mit 1 bis 4 Kohlenstoffatomen, R² ein Alkylrest mit 1 bis 4 Kohlenstoffatomen, R³ ein divalenter organischer Rest mit 1 bis 12 Atomen ausgewählt aus C, N, S und / oder O in der Kette ist, R⁴ ein Wasserstoffatom oder ein Alkylrest mit 1 bis 10 Kohlenstoffatomen ist und R eine difunktionelle organische Gruppe ist, um die Isocyanatgruppen des Prepolymers mit dem Silan der Formel (1) zu verkappen,
**dadurch gekennzeichnet,**
**dass** die Polyolmischung zusätzlich mindestens eine gegenüber Isocyanaten monofunktionelle Verbindung ausgewählt aus Monoalkoholen, Monomercaptanen, Monoaminen oder deren Mischungen enthält und der Anteil der monofunktionellen Verbindung 1 bis 40 Mol% der Mischung aus Polyol und der monofunktionellen Verbindung beträgt.

2. Verfahren nach Anspruch 1 **dadurch gekennzeichnet, dass** R³ die folgenden Strukturelemente (2) aufweist: 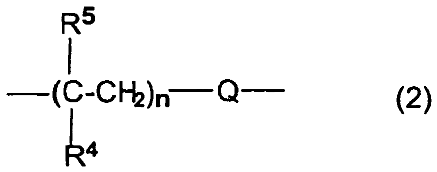 wobei n eine ganze Zahl zwischen 1 und 6 ist,
Q ist N, O, S, eine kovalente Bindung oder NR⁴ und
R⁴ und R⁵ können unabhängig voneinander ein Wasserstoffatom oder ein Alkylrest mit 1 bis 10 Kohlenstoffatomen sein.

3. Verfahren nach Anspruch 1 oder / und 2 **dadurch gekennzeichnet, dass** das Silan der Formel (1) hergestellt wird durch Umsetzung eines Aminosilans mit primären oder sekundären Aminogruppen mit einem Carbonat, ausgewählt aus Ethylencarbonat, Propylencarbonat, Butylencarbonat oder einem Lacton, ausgewählt aus Propiolacton, Butyrolacton oder Caprolacton.

4. Verfahren nach Anspruch 3, wobei das Aminosilan ausgewählt wird aus 3-Aminopropyl-trimethoxysilan, 3-Aminopropyl-triethoxysilan, N-(n-butyl)-3-aminopropyltrimethoxysilan, 3-Aminopropylmethyldimethoxysilan, 3-Aminopropylmethyldiethoxysilan, oder Bis(3-triethoxysilylpropyl)amin.

5. Verfahren nach mindestens einem der Ansprüche 1 bis 4, wobei R ein difunktioneller gerader oder verzweigter Alkylenrest mit 2 bis 6 Kohlenstoffatomen ist.

6. Verfahren nach mindestens einem der Ansprüche 1 bis 5, wobei m null oder eins ist.

7. Verfahren nach mindestens einem der Ansprüche 1 bis 6, **dadurch gekennzeichnet, dass** der Anteil der monofunktionellen Verbindung 1 bis 20 Mol%, der Mischung aus Polyol und der monofunktionellen Verbindung beträgt.

8. Silyliertes Polyurethan, hergestellt durch ein Verfahren umfassend:
(A) Umsetzen
(i) mindestens einer Polyolverbindung mit einem Molekulargewicht von 4 000-20 000 Dalton mit
(ii) einem Diisocyanat bei einem stöchiometrischen Überschuss der Düsocyanatverbindung gegenüber den OH-Gruppen der Polyolverbindung oder der Polyolverbindungen, wodurch ein Polyurethan-Prepolymer gebildet wird, das Isocyanat-terminiert ist; und
(B) Umsetzen des Polyurethan-Prepolymers mit einem oder mehreren OH-terminierten Silanen der Formel (1): 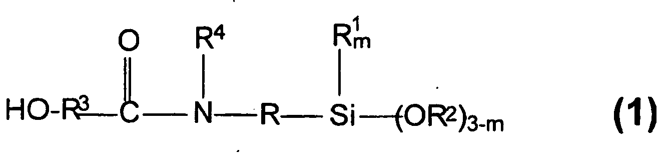 worin m 0, 1 oder 2 ist, R¹ ein Alkylrest mit 1 bis 4 Kohlenstoffatomen, R² ein Alkylrest mit 1 bis 4 Kohlenstoffatomen, R³ ein divalenter organischer Rest mit 1 bis 12 Atomen ausgewählt aus C, N, S und / oder O in der Kette ist, R⁴ ein Wasserstoffatom oder ein Alkylrest mit 1 bis 10 Kohlenstoffatomen ist und R eine difunktionelle organische Gruppe ist, um die Isocyanatgruppen des Prepolymers mit dem Silan der Formel (1) zu verkappen,
**dadurch gekennzeichnet, dass** die Polyolmischung zusätzlich mindestens eine gegenüber Isocyanaten monofunktionelle Verbindung ausgewählt aus Monoalkoholen, Monomercaptanen, Monoaminen oder deren Mischungen enthält und der Anteil der monofunktionellen Verbindung 1 bis 40 Mol% der Mischung aus Polyol und der monofunktionellen Verbindung beträgt.

9. Silyliertes Polyurethan nach Anspruch 8,**dadurch gekennzeichnet, dass** R³ die folgenden Strukturelemente (2) aufweist: 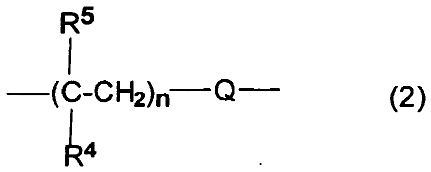 wobei n eine ganze Zahl zwischen 1 und 6 ist,
Q ist N, O, S, eine kovalente Bindung oder NR⁴ und
R⁴ und R⁵ können unabhängig voneinander ein Wasserstoffatom oder ein Alkylrest mit 1 bis 10 Kohlenstoffatomen sein.

10. Silyliertes Polyurethan nach Anspruch 8 oder / und 9, **dadurch gekennzeichnet, dass** das Silan der Formel (1) hergestellt wird durch Umsetzung eines Aminosilans mit primären oder sekundären Aminogruppen mit einem Carbonat, ausgewählt aus Ethylencarbonat, Propylencarbonat, Butylencarbonat oder einem Lacton, ausgewählt aus Propiolacton, Butyrolacton oder Caprolacton.

11. Silyliertes Polyurethan nach Anspruch 10, wobei das Aminosilan ausgewählt wird aus 3-Aminopropyl-trimethoxysilan, 3-Aminopropyl-triethoxysilan, N-(n-butyl)-3-Aminopropyltrimethoxysilan, 3-aminopropylmethyldimethoxysilan, 3-Aminopropylmethyldiethoxysilan, oder Bis(3-triethoxysilylpropyl)amin.

12. Silyliertes Polyurethan mindestens einem der Ansprüche 8 bis 11, **dadurch gekennzeichnet, dass** die Polyolmischung zusätzlich mindestens eine gegenüber Isocyanaten monofunktionelle Verbindung ausgewählt aus Monoalkoholen, Monomercaptanen, Monoaminen oder deren Mischungen enthält und der Anteil der monofunktionellen Verbindung 1 bits 20 Mol%, der Mischung aus Polyol und der monofunktionellen Verbindung beträgt.

13. Silyliertes Polyurethan nach mindestens einem der Ansprüche 8 bis 12, wobei m null oder eins ist.

14. Silyliertes Polyurethan nach mindestens einem der Ansprüche 8 bis 13, wobei die Diisocyanatverbindung gewählt ist aus der Gruppe bestehend aus 2,4-Toluoldiisocyanate, 2,6-Toluol-diisocyanat, 4,4'-Diphenyl-methandiisocyanat, 2,4'-Diphenyl-methandiisocyanat. 1-Isocyanato-3,3,5-trimethyl-5-isocyanatomethylcyclohexan (Isophorondiisocyanat, IPDI), 4,4'-Dicyclohexylmethan-diisocyanat-Isomeren, Tetramethylxylylendiisocyanat (TMXDI), und Mischungen davon.

15. Verwendung einer Zubereitung enthaltend ein oder mehrere silylierte(s) Polyurethan(e) nach mindestens einem der Ansprüche 8 bis 14 als Klebstoff, Dichtstoff oder Beschichtungsmittel.

## Claims

1. A method for producing a silylated polyurethane comprising:
(A) reacting
(i) at least one polyol compound with a molecular weight of 4,000-20,000 dalton with
(ii) a diisocyanate at a stoichiometric excess of the diisocyanate compound relative to the OH groups of the polyol compound or polyol compounds, whereby a polyurethane prepolymer is formed which is isocyanate-terminated; and
(B) reacting the polyurethane prepolymer with one or more OH-terminated silanes of formula (1): 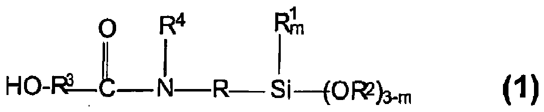 in which m is 0, 1 or 2, R¹ is an alkyl residue with 1 to 4 carbon atoms, R² an alkyl residue with 1 to 4 carbon atoms, R³ a divalent organic residue with 1 to 12 atoms selected from C, N, S and/or O in the chain, R⁴ is a hydrogen atom or an alkyl residue with 1 to 10 carbon atoms and R is a difunctional organic group, in order to cap the isocyanate groups of the prepolymer with the silane of formula (1),
**characterised in that** the polyol mixture additionally contains at least one compound monofunctional towards isocyanates selected from monoalcohols, monomercaptans, monoamines or mixtures thereof and the proportion of the monofunctional compound amounts to 1 to 40 mol% of the mixture of polyol and the monofunctional compound.

2. A method according to claim 1, **characterised in that** R³ comprises the following structural element (2): 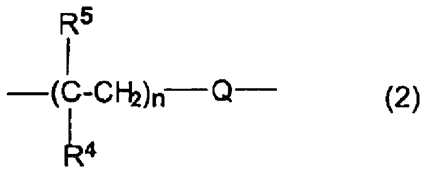 wherein n is an integer between 1 and 6,
Q is N, O, S, a covalent bond or NR⁴ and
R⁴ and R⁵ may mutually independently be a hydrogen atom or an alkyl residue with 1 to 10 carbon atoms.

3. A method according to claim 1 and/or 2, **characterised in that** the silane of formula (1) is produced by reacting an aminosilane having primary or secondary amino groups with a carbonate selected from ethylene carbonate, propylene carbonate, butylene carbonate or a lactone selected from propiolactone, butyrolactone or caprolactone.

4. A method according to claim 3, wherein the aminosilane is selected from 3-aminopropyltrimethoxysilane, 3-aminopropyltriethoxysilane, N-(n-butyl)-3-aminopropyltrimethoxysilane, 3-aminopropylmethyldimethoxysilane, 3-aminopropylmethyldiethoxysilane or bis(3-triethoxysilylpropyl)-amine.

5. A method according to at least one of claims 1 to 4, wherein R is a difunctional linear or branched alkylene residue with 2 to 6 carbon atoms.

6. A method according to at least one of claims 1 to 5, wherein m is zero or one.

7. A method according to at least one of claims 1 to 6, **characterised in that** the proportion of monofunctional compound amounts to 1 to 20 mol% of mixture of polyol and the monofunctional compound.

8. A silylated polyurethane produced by a method comprising:
(A) reacting
(i) at least one polyol compound with a molecular weight of
4,000-20,000 dalton with
(ii) a diisocyanate at a stoichiometric excess of the diisocyanate compound relative to the OH groups of the polyol compound or polyol compounds, whereby a polyurethane prepolymer is formed which is isocyanate-terminated; and
(B) reacting the polyurethane prepolymer with one or more OH-terminated silanes of formula (1): 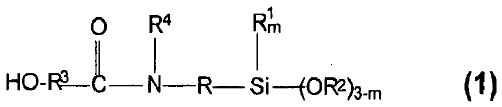 in which m is 0, 1 or 2, R¹ is an alkyl residue with 1 to 4 carbon atoms, R² an alkyl residue with 1 to 4 carbon atoms, R³ a divalent organic residue with 1 to 12 atoms selected from C, N, S and/or O in the chain, R⁴ is a hydrogen atom or an alkyl residue with 1 to 10 carbon atoms and R is a difunctional organic group, in order to cap the isocyanate groups of the prepolymer with the silane of formula (1),
**characterised in that** the polyol mixture additionally contains at least one compound monofunctional towards isocyanates selected from monoalcohols, monomercaptans, monoamines or mixtures thereof and the proportion of the monofunctional compound amounts to 1 to 40 mol% of the mixture of polyol and the monofunctional compound.

9. A silylated polyurethane according to claim 8, **characterised in that** R³ comprises the following structural element (2): 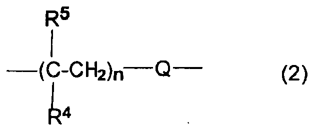 wherein n is an integer between 1 and 6,
Q is N, O, S, a covalent bond or NR⁴ and
R⁴ and R⁵ may mutually independently be a hydrogen atom or an alkyl residue with 1 to 10 carbon atoms.

10. A silylated polyurethane according to claim 8 and/or 9, **characterised in that** the silane of formula (1) is produced by reacting an aminosilane having primary or secondary amino groups with a carbonate selected from ethylene carbonate, propylene carbonate, butylene carbonate or a lactone selected from propiolactone, butyrolactone or caprolactone.

11. A silylated polyurethane according to claim 10, wherein the aminosilane is selected from 3-aminopropyltrimethoxysilane, 3-aminopropyltriethoxysilane, N-(n-butyl)-3-aminopropyltrimethoxysilane, 3-aminopropylmethyldimethoxysilane, 3-aminopropylmethyldiethoxysilane or bis(3-triethoxy-silylpropyl)amine.

12. A silylated polyurethane according to at least one of claims 8 to 11, **characterised in that** the polyol mixture additionally contains at least one compound monofunctional towards isocyanates selected from monoalcohols, monomercaptans, monoamines or mixtures thereof and the proportion of the monofunctional compound amounts to 1 to 20 mol% of the mixture of polyol and the monofunctional compound.

13. A silylated polyurethane according to at least one of claims 8 to 12, wherein m is zero or one.

14. A silylated polyurethane according to at least one of claims 8 to 13, wherein the diisocyanate compound is selected from the group consisting of 2,4-toluene diisocyanate, 2,6-toluene diisocyanate, 4,4'-diphenylmethane diisocyanate, 2,4'-diphenylmethane diisocyanate, 1-isocyanato-3,3,5-trimethyl-5-isocyanatomethylcyclohexane (isophorone diisocyanate, IPDI), 4,4'-dicyclohexylmethane diisocyanate isomers, tetramethylxylylene diisocyanate (TMXDI), and mixtures thereof.

15. Use of a preparation containing one or more silylated polyurethane(s) according to at least one of claims 8 to 14 as an adhesive, sealant or coating composition.

## Revendications

1. Procédé pour la préparation d'un polyuréthane silylé, comprenant :
(A) la mise en réaction
(i) d'au moins un composé de polyol possédant un poids moléculaire de 4.000 à 20.000 Daltons, avec
(ii) un diisocyanate avec un excès stoechiométrique du composé de diisocyanate vis-à-vis des groupes OH du composé de polyol ou des composés de polyol, afin d'obtenir un prépolymère de polyuréthane qui est terminé par un groupe isocyanate ; et
(B) la mise en réaction du prépolymère de polyuréthane avec un ou plusieurs silanes à terminaison OH répondant à la formule (1) : 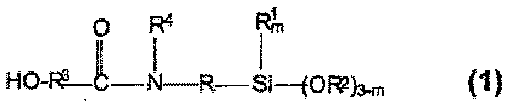 dans laquelle m est égal à 0, 1 ou 2, R¹ représente un résidu alkyle contenant de 1 à 4 atomes de carbone, R² représente un résidu alkyle contenant de 1 à 4 atomes de carbone ; R³ représente un résidu organique divalent contenant de 1 à 12 atomes choisis parmi un atome de carbone, un atome d'azote, un atome de soufre et/ou un atome d'oxygène dans la chaîne, R⁴ représente un atome d'hydrogène ou un résidu alkyle contenant de 1 à 10 atomes de carbone, et R représente un groupe organique difonctionnel, pour le coiffage des groupes isocyanate du prépolymère avec le silane répondant à la formule (1),
**caractérisé en ce que** le mélange de polyols contient en outre au moins un composé monofonctionnel vis-à-vis d'isocyanates, choisi parmi des monoalcools, des monomercaptans, des monoamines ou leurs mélanges, et la fraction du composé monofonctionnel représente de 1 à 40 moles % du mélange du polyol et du composé monofonctionnel.

2. Procédé selon la revendication 1, **caractérisé en ce que** R³ présente les éléments de structure (2) suivants : 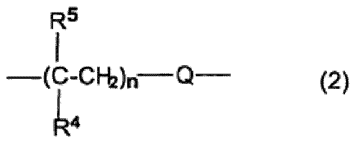 dans lesquels n représente un nombre entier entre 1 et 6 ;
Q représente un atome d'azote, un atome d'oxygène, un atome de soufre, une liaison covalente ou bien un groupe NR⁴ ; et
R⁴ et R⁵ peuvent représenter, indépendamment l'un de l'autre, un atome d'hydrogène ou un résidu alkyle contenant de 1 à 10 atomes de carbone.

3. Procédé selon la revendication 1 et/ou 2, **caractérisé en ce qu'**on prépare le silane répondant à la formule (1) par la mise en réaction d'un aminosilane comprenant des groupes amino primaires ou secondaires avec un carbonate choisi parmi le carbonate d'éthylène, le carbonate de propylène, le carbonate de butylène ou avec une lactone choisie parmi la propiolactone, la butyrolactone ou la caprolactone.

4. Procédé selon la revendication 3, dans lequel l'aminosilane est choisi parmi le 3-aminopropyltriméthoxysilane, le 3-aminopropyltriéthoxysilane, le N-(n-butyl)-3-aminopropyltriméthoxysilane, le 3-aminopropylméthyl-diméthoxysilane, le 3-aminopropylméthyldiéthoxysilane ou la bis(3-triéthoxysilylpropyl)amine.

5. Procédé selon au moins une des revendications 1 à 4, dans lequel R représente un résidu alkylène difonctionnel à chaîne droite ou ramifiée contenant de 2 à 6 atomes de carbone.

6. Procédé selon au moins une des revendications 1 à 5, dans lequel m est égal à 0 ou 1.

7. Procédé selon au moins une des revendications 1 à 6, **caractérisé en ce que** la fraction du composé monofonctionnel représente de 1 à 20 moles % du mélange du polyol et du composé monofonctionnel.

8. Polyuréthane silylé que l'on prépare via un procédé comprenant :
(A) la mise en réaction
(i) d'au moins un composé de polyol possédant un poids moléculaire de 4.000 à 20.000 Daltons, avec
(ii) un diisocyanate avec un excès stoechiométrique du composé de diisocyanate vis-à-vis des groupes OH du composé de polyol ou des composés de polyol, afin d'obtenir un prépolymère de polyuréthane qui est terminé par un groupe isocyanate ; et
(B) la mise en réaction du prépolymère de polyuréthane avec un ou plusieurs silanes à terminaison OH répondant à la formule (1) : 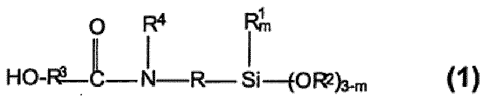 dans laquelle m est égal à 0, 1 ou 2, R¹ représente un résidu alkyle contenant de 1 à 4 atomes de carbone, R² représente un résidu alkyle contenant de 1 à 4 atomes de carbone ; R³ représente un résidu organique divalent contenant de 1 à 12 atomes choisis parmi un atome de carbone, un atome d'azote, un atome de soufre et/ou un atome d'oxygène dans la chaîne, R⁴ représente un atome d'hydrogène ou un résidu alkyle contenant de 1 à 10 atomes de carbone, et R représente un groupe organique difonctionnel, pour le coiffage des groupes isocyanate du prépolymère avec le silane répondant à la formule (1), **caractérisé en ce que** le mélange de polyols contient en outre au moins un composé monofonctionnel vis-à-vis d'isocyanates, choisi parmi des monoalcools, des monomercaptans, des monoamines ou leurs mélanges, et la fraction du composé monofonctionnel représente de 1 à 40 moles % du mélange du polyol et du composé monofonctionnel.

9. Polyuréthane silylé selon la revendication 8, **caractérisé en ce que** R³ présente les éléments de structure (2) suivants : 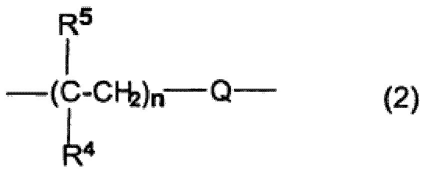 dans lesquels n représente un nombre entier entre 1 et 6 ;
Q représente un atome d'azote, un atome d'oxygène, un atome de soufre, une liaison covalente ou bien un groupe NR⁴ ; et
R⁴ et R⁵ peuvent représenter, indépendamment l'un de l'autre, un atome d'hydrogène ou un résidu alkyle contenant de 1 à 10 atomes de carbone.

10. Polyuréthane silylé selon la revendication 8 et/ou 9, **caractérisé en ce qu'**on prépare le silane répondant à la formule (1) par la mise en réaction d'un aminosilane comprenant des groupes amino primaires ou secondaires avec un carbonate choisi parmi le carbonate d'éthylène, le carbonate de propylène, le carbonate de butylène ou avec une lactone choisie parmi la propiolactone, la butyrolactone ou la caprolactone.

11. Polyuréthane silylé selon la revendication 10, dans lequel l'aminosilane est choisi parmi le 3-aminopropyltriméthoxysilane, le 3-aminopropyltriéthoxysilane, le N-(n-butyl)-3-aminopropyltriméthoxysilane, le 3-aminopropylméthyl-diméthoxysilane, le 3-aminopropylméthyldiéthoxysilane ou la bis(3-triéthoxysilylpropyl)amine.

12. Polyuréthane silylé selon au moins une des revendications 8 à 11, **caractérisé en ce que** le mélange de polyols contient en outre au moins un composé monofonctionnel vis-à-vis d'isocyanates, choisi parmi des monoalcools, des monomercaptans, des monoamines ou leurs mélanges, et la fraction du composé monofonctionnel représente de 1 à 20 moles % du mélange du polyol et du composé monofonctionnel.

13. Polyuréthane silylé selon au moins une des revendications 8 à 12, dans lequel m est égal à 0 ou 1.

14. Polyuréthane silylé selon au moins une des revendications 8 à 13, dans lequel le composé de diisocyanate est choisi parmi le groupe constitué par le 2,4-toluènediisocyanate, le 2,6-toluènediisocyanate, le 4,4'-diphénylméthanediisocyanate, le 2,4'-diphénylméthanediisocyanate, le 1-isocyanato-3,3,5-triméthyl-5-isocyanatométhylcyclohexane (isophoronediisocyanate, IPDI), des isomères du 4,4'-dicyclohexylméthanediisocyanate, le tétraméthylxylylènediisocyanate (TMXDI) et leurs mélanges.

15. Utilisation d'une préparation contenant un ou plusieurs polyuréthanes silylés selon au moins une des revendications 8 à 14, à titre d'adhésif, de substance d'étanchéité ou d'agent d'enduction.
